# EUROPEAN PATENT APPLICATION

(11) **EP 4 523 791 A1**
(43) Date of publication of application: **19.03.2025**
(21) Application number: 23197221.7
(22) Date of filing: 13.09.2023
(51) Int. Cl.: B01L 3/00

(54) **KITS AND METHODS FOR PRESERVATION OF BIOLOGICAL SAMPLES**

(71) Applicant: Technische Universität München, 80333 München (DE)
(72) Inventor: The designation of the inventor has not yet been filed
(74) Representative: Engelhard, Markus

(57) **Abstract**

The invention concerns kits and methods for the preservation and transportation of biological samples. The present invention is based on a kit for the preservation of a biological sample, wherein the kit comprises: i) an absorption agent, which is capable of releasing energy upon contact with a liquid solvent, optionally wherein the absorption agent is located in a transportation container, such as a transportation tube, or is located on a substrate, and ii) an extraction container, such as an extraction tube, comprising the liquid solvent. The present invention also relates to the use of an absorption agent for the preservation of a biological sample. Further provided is the use of a kit according to the present invention for the preservation of a biological sample and/or for the transportation of a biological sample. Finally, the present invention also relates to a method for preserving a biological sample.

## Description

### KITS AND METHODS FOR PRESERVATION OF BIOLOGICAL SAMPLES

### FIELD OF THE INVENTION

The invention concerns kits and methods for the preservation and transportation of biological samples. The present invention is based on a kit for the preservation of a biological sample, wherein the kit comprises: i) an absorption agent, which is capable of releasing energy upon contact with a liquid solvent, optionally wherein the absorption agent is located in a transportation container, such as a transportation tube, or is located on a substrate, and ii) an extraction container, such as an extraction tube, comprising the liquid solvent. The present invention also relates to the use of an absorption agent for the preservation of a biological sample. Further provided is the use of a kit according to the present invention for the preservation of a biological sample and/or for the transportation of a biological sample. Finally, the present invention also relates to a method for preserving a biological sample.

### DESCRIPTION

Early and accurate diagnostic testing is a key to prevent the transmission of pathogens in case of suspected infectious diseases, which became particularly apparent with the outbreak of the COVID-19 pandemic and the extremely contagious nature of the SARS-CoV-2 virus, the causative pathogen of the disease. Diagnostic analysis of biological samples for the presence of pathogens requires the collection of biological samples, the transportation of samples to the clinical or diagnostic laboratory, and the processing of samples to identify a specific causative agent of a disease. The same is required for monitoring of diseases and genomic surveillance.

The collection, transportation and processing of suspected infectious biological samples raises certain biosafety concerns because the samples might be contagious, and may infect people involved in their transportation upon contact due to i.e., spilling of the sample. Thus, the risk of contamination upon transportation of suspected infectious biological samples is commonly lowered by implementing measures, that manage the risk of external contact of the potentially infectious sample. Therefore, common methods for the transportation of potentially infectious samples usually require a complex type of secondary packaging to reduce the risk of the actual sample vessel from breaking, and thus from leakage of the potentially infectious sample into the environment. Even if these packing regulations are followed, carriers may generally refuse to transport samples falling under infection protection restrictions and countries/health authorities often require many documents to permit transportation of these samples across borders. Only specialist logistics companies can manage this complexity, but dispatching samples with them is associated with prohibitively high costs. If the sample to be shipped needs to be refrigerated or frozen for stabilization of the sample, there are additional high costs for maintaining a cold-chain throughout transportation of the biological sample, which usually requires additionally expensive transportation via logistic companies.

This is particularly challenging in lower- and middle-income countries because of infrastructural constrains and limited resources. The absence of infrastructure and analytic/diagnostic assays often makes it necessary that samples need to be shipped to laboratories and specialists in distant areas or even foreign countries to allow accurate analysis. However, due to the high cost of common biosafety compliant transportation methods, samples can often not be analysed fast and frequently enough in areas of the world that would need it most.

Thus, there is a need for minimizing the transportation and handling risk of biological samples to the laboratory processing and testing areas and to ensure biological sample stability without compromising biosafety of handling personnel.

US7638099B2 discloses devices and methods for collecting, storing or transporting liquid suspensions of biological specimens containing analytes of interest in a dry state.

US20060039833A1 discloses a body fluid collecting, transporting, and dispensing system including a body fluid collecting receptacle and a handle for supporting the receptacle in a fluid collection position.

WO2022070211A1 discloses a transport media composition for transportation of a virus or a microbe in a viable state.

Unfortunately, existing solutions for inactivating pathogens in a sample often contain hazardous substances that make transportation of such samples bureaucratic and expensive.

Thus, it is an objective of the invention to provide an easy and cheap way to transport potentially infectious biological samples. Another objective of the present invention is to provide a method allowing for sample transportation without cold-chain requirements. Yet another objective of the present invention is to provide a way of directly inactivating pathogens within a sample, and thereby to minimize the transportation and handling risk of samples to the laboratory processing and testing areas.

### BRIEF DESCRIPTION OF THE INVENTION

Generally, and by way of brief description, the main aspects of the present invention can be described as follows:
In a first aspect, the invention pertains to a kit for the preservation of a biological sample.

In a second aspect, the invention pertains to the use of an absorption agent for the preservation of a biological sample.

In a third aspect, the invention pertains to the use of a kit according to the first aspect of the present invention, for the preservation of a biological sample and/or for the transportation of a biological sample.

In a fourth aspect, the invention pertains to a method for preserving a biological sample.

These and other features, aspects, and advantages of the present subject matter will become better understood with reference to the following description. This summary is provided to introduce a selection of concepts in a simplified form. This summary is not intended to identify key features or essential features of the subject matter, nor is it intended to be used to limit the scope of the subject matter.

### DETAILED DESCRIPTION OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In the first aspect, the invention pertains to a kit for the preservation of a biological sample, the kit comprising:
i) an absorption agent, which is capable of releasing energy of at least 100.000 J/kg, preferably of at least 200.000 J/kg, more preferably of at least 300.000 J/kg, and most preferably of around 330.000 J/kg, upon contact with a liquid solvent, optionally wherein the absorption agent is located in a transportation container, such as a transportation tube, or is located on a substrate, such as on a paper, and
ii) an extraction container, such as an extraction tube, comprising the liquid solvent.

The invention is based on the preservation (inactivation) of pathogens and/or the stabilization of at least one biological molecule in a biological sample, such as a potentially infectious biological sample, by an exothermic reaction induced upon contact of an absorption agent with a liquid solvent. Importantly, the thermic energy released by the absorption agent triggers a heating of the sample without the need for an external heating source. Thereby, components of the biological sample are immobilized on or in a substrate, which is caused by desiccation induced by the release of energy and/or the increase in temperature upon contact of the absorption agent with the liquid solvent and/or the removal of moisture from the liquid solvent. In one embodiment, the components of the sample are immobilized in a solid form. In another embodiment, the components of the sample are immobilized in a gel-like state or a liquid-state. In yet another embodiment, the components of the sample are immobilized within the transportation container, such as the transportation tube, or on the substrate, in a gel-like state or a liquid-state. In a further embodiment, the components of the sample are immobilized in a solid form on the absorption agent, which preferably has a granular form. In yet another embodiment, the substrate is the absorption agent.

The term "preservation" as used in the present invention shall be understood as a way of inactivating cells, such as pathogenic cells, and/or viruses, within a sample and/or sterilizing a sample and/or stabilizing biological molecules such as a nucleic acids, proteins (e.g., an antibody and/or insulin), fatty acids (e.g., an omega 3 fatty acid), small molecules, or organic compounds. According to the present invention, the term "preservation" is used synonymously with the term "sterilization" and/or "inactivation".

In one embodiment, which can be combined with any other aspect and/or embodiment of the present invention, the absorption agent of the kit (i), which is capable of releasing energy of at least 100.000 J/kg, preferably of at least 200.000 J/kg, more preferably of at least 300.000 J/kg, and most preferably of around 330.000 J/kg, upon contact with a liquid solvent, is capable of releasing said energy of at least 100.000 J/kg, preferably of at least 200.000 J/kg, more preferably of at least 300.000 J/kg, and most preferably of around 330.000 J/kg, upon contact with a liquid solvent to this liquid solvent. Accordingly, the energy of at least 100.000 J/kg, preferably of at least 200.000 J/kg, more preferably of at least 300.000 J/kg, and most preferably of around 330.000 J/kg, which is released by the absorption agent of the kit (i), is an energy difference which can be measured between the liquid solvent and the biological sample (i.e. analyzing a system comprising the liquid solvent within the biological sample). The energy, which is released by the absorption agent of the kit (i) upon contact with a liquid solvent, and which can be measured between the absorption agent and the liquid solvent (i.e. analyzing a system comprising the absorption agent and the liquid solvent), is higher than the energy difference which can be measured between the liquid solvent and the biological sample. Thus, the energy of at least 100.000 J/kg, preferably of at least 200.000 J/kg, more preferably of at least 300.000 J/kg, and most preferably of around 330.000 J/kg, which is released upon contact of the absorption agent with the liquid solvent, is the energy difference measured in a system comprising the liquid solvent within the biological sample.

In one embodiment, the absorption agent is located in a transportation tube or is located on a substrate, such as on a paper or a cave card. According to this invention, the transportation tube can also be referred to as a specimen transportation tube. According to the present invention, the paper can also be referred to as a specimen transportation paper.

In a preferred embodiment relating to the kit for the preservation of a biological sample according to the first aspect of the present invention, the biological sample comprises at least one pathogen and/or at least one biological molecule, such as a nucleic acid, a protein (e.g., an antibody and/or insulin), a fatty acid (e.g., an omega 3 fatty acid), a small molecule, or an organic compound, optionally wherein the at least one pathogen is a bacterium, a virus, a fungus, a parasite, or a protozoan, and wherein the preservation of the biological sample comprises an inactivation of the at least one pathogen and/or a stabilization of the at least one biological molecule present in the biological sample.

In one embodiment, the "protein" is a protein biomarker. In a further embodiment, the "small molecule" is a small molecule biomarker.

In a preferred embodiment, the preservation of the biological sample comprises an inactivation of at least one pathogen present in the biological sample, such as an inactivation of a bacterium, a virus, a fungus, a parasite, or a protozoan.

A further embodiment pertains to the kit for the preservation of a biological sample according to the first aspect of the present invention, wherein the absorption agent is a substance that is activated by the absorption of moisture from the liquid solvent, and wherein the absorption agent is a substance that releases energy and/or increases its temperature upon absorption of moisture from the liquid solvent, thereby facilitating preservation of the at least one pathogen and/or the at least one biological molecule present in the biological sample, optionally wherein the absorption agent is releasing energy of at least 100.000 J/kg, preferably of at least 200.000 J/kg, more preferably of at least 300.000 J/kg, and most preferably of around 330.000 J/kg, upon contact with the liquid solvent over a period of no more than 10 min, preferably of no more than 5 min, more preferably of no more than 3 min, and most preferably of no more than 2 min. In one embodiment, the preservation of the at least one pathogen present in the biological sample is caused by desiccation.

In one embodiment, the absorption agent located in a transportation container, such as a transportation tube, or located on a substrate is mixed with at least one organic compound, such as a protein (for example a proteinase), and/or with at least one inorganic substance, such as a bead, like a magnetic bead, a metallic bead (for example an aluminum bead), or a ceramic bead, optionally wherein the at least one organic compound and/or the at least one inorganic substance is able to regulate the temperature in the transportation container, such as the transportation tube, or of the substrate, preferably wherein the regulation is a reduction of a first temperature, wherein the first temperature is a temperature that increased upon contact of the absorption agent with the liquid solvent, and/or wherein the regulation is a retention of a second temperature over a period of time, such as for at least 1 minute, at least 2 minutes, at least 3 minutes, at least 4 minutes, or at least 5 minutes, wherein the second temperature is lower than the first temperature, optionally wherein the first temperature and/or the second temperature is at least 40°C, preferably at least 50°C, more preferably at least 60°C, even more preferably at least 70°C, even more preferably at least 80°C, even more preferably at least 90°C, and most preferably at least 100°C.

Thus, adding the at least one organic compound and/or the at least one inorganic substance that is able to regulate the temperature in the transportation tube or of the substrate enables to maintain the first temperature (i.e. the higher or the highest temperature) for a shorter time and the second temperature (i.e. the lower temperature) for a longer time. Addition of the at least one organic compound and/or the at least one inorganic substance can thus be beneficial because it allows a better regulation of the temperature within the transportation tube or on the substrate. In one embodiment, the at least one organic compound and/or the at least one inorganic substance, such as the bead, stores a part of the heat released by the absorption agent upon contact with the liquid agent.

In one embodiment, the absorption agent is mixed with at least at least one organic compound, such as a protein (for example a proteinase), and/or with at least one inorganic substance, such as a bead, like a magnetic bead, a metallic bead (for example an aluminum bead), or a ceramic bead, wherein the absorption agent is in a solid state.

In a preferred embodiment, the absorption agent is releasing energy of at least 100.000 J/kg, preferably of at least 200.000 J/kg, more preferably of at least 300.000 J/kg, and most preferably of at least 330.000 J/kg upon contact with the liquid solvent over a period of no more than 10 min, preferably of no more than 5 min, more preferably of no more than 3 min, and most preferably of no more than 2 min.

According to the present invention, the thermic energy released by the absorption agent upon contact of the absorption agent with the liquid solvent is preferably released from Köstrolith 13X, which is a preferred example of the absorption agent used in the present invention. In yet another preferred embodiment, the energy released is preferably released by Köstrolith 13X upon contact with a liquid solvent within a transportation container, such as a transportation tube.

According to the present invention, the absorption agent is a substance that releases energy upon contact with the liquid solvent. Said release of energy subsequently and/or simultaneously causes an increase in temperature of the composition, optionally wherein the composition is present within a transportation container, such as a transportation tube. Said increase in temperature can induce an inactivation of cells within the biological sample, which are optionally present within the transportation container, such as the transportation tube, including a pathogen, such as a bacterium, a virus, a fungus, a parasite, or a protozoan. In one example, the inactivation of cells and/or viruses within the transportation container, such as the transportation tube, which are optionally present within the transportation container, such as the transportation tube, occurs by denaturation of proteins.

Importantly, the present invention is advantageous over prior art methods of transporting potentially infectious biological samples in the liquid state because immobilized components of the potentially infectious biological sample cannot accidentally be spilled, which could otherwise lead to a contamination of surface areas. The immobilized state of the components of the sample also prevents the multiplication of pathogens within the sample. Thereby, the present invention allows to minimize the biosafety transportation and handling risks without the need of using toxic substances for inactivation of cells within a sample.

The pathogen inactivation, pathogen immobilization and sample stabilization according to the present invention enables the simple and safe transportation of preserved and/or inactivated biological samples, for example via conventional letter mail. Thus, the present invention enables regulatory advantages for biological sample transportation.

A pathogen according to the present invention is any virus and/or organism that is potentially infectious. Representative pathogens include, without limitation, bacteria that belong to the species selected from Klebsiella pneumoniae, Kingella kingae, Acinetobacter calcoaceticus, Clostridium difficile, Heliobacter pylori, Pseudomonas aeruginosa, Stenotrophomonas maltophilia, Klebsiella pneumonia, Klebsiella pneumonia, Escherichia coli, and Yersinia pseudotuberculosis.

In one embodiment pertaining to the kit for the preservation of a biological sample according to the first aspect of the present invention, the pathogen is selected from the group consisting of coronavirus, SARS coronavirus, respiratory syncytial virus (RSV), measles virus, influenza virus, rabies virus, Dengue fever virus, HIV (human immunodeficiency virus), hepatitis A virus (HAV), hepatitis B virus (HBV), hepatitis C virus (HCV), hepatitis D virus, hepatitis E virus, foot-and-mouth disease virus (FMDV), bovine leukosis virus (BLV), bovine parainfluenza virus, human parainfluenza virus (HPIV), bovine respiratory syncytial virus, porcine reproductive and respiratory syndrome virus, respiratory syncytial virus, vesicular stomatitis virus, bovine viral diarrhea virus, bovine coronavirus, BHV1 virus, equine arteritis virus, Nipah virus, Porcine Respiratory Corona Virus Infection, Jaagsiekte Sheep Retrovirus, infectious bronchitis virus, avian pneumovirus, newcastle disease virus, astrovirus, Influenzavirus A (Avian influenza) subtype H5N1, Acinetobacter baumannii, Anaplasma, Brazilian burkholderia, Ancylostoma duodenale, hemolytic alkholderia Viralidae, Babesia, Bacillus anthracis, Bacillus cereus, Burkholderia henselae, BK virus, Bordella pertussis, Burkholderia mallei, Calicivirus, Candida albicans, Chlamydia trachomatis, Chlamydophila pneumoniae, Clostridium botulinum, Clostridium deficile, Clostridium tetani, Coronavirus, Corynebacterium diphtheriae, Clostridium burnetii, Cytomegalovirus (CMV), Dientamoeba fragilis, Ehrlicia chafensis, Ehrlicia ewingii, enterovirus, Epstein-bar virus (EBV), Clostridium candididium, Haemophilus, Haemophilus influenzae, simple herpesvirus 1 (HSV-1), simple herpesvirus 2 (HSV-2), heartland virus, Histoplasma capsultum, bocavirus (HBoV), human herpesvirus 6 (HHV-6), human herpesvirus 7 (HHV-7), human metapneumovirus (hMPV), human papilloma virus (HPV), Japanese encephalitis virus, JC virus, funin virus, Kingera, Kingella kingae, Klebsiella granulomatis, Lassavirus, Legionella pneumophila, Machupovirus, Marburg virus, infectious soft tumor virus (MCV), epidemic parotitis virus, Mycobacterium leprae, Mycobacterium lepromatosis, Mycobacterium tuberculosis, Mycobacterium ulcerans mulcerans, pneumonia mycoplasma pneumoniae, rhinovirus, rotavirus, varicella-zoster virus, Venezuelan encephalitis virus, West Nile virus, Western horse encephalitis virus, Yellow fever virus, Acinetobacter, Actinobacillus, Bacillus, Bacteroides, Bordetella, Brucella, Burkholderi, Campylobacter, Chlamydia, Chlamydophila, Clostridium, Cyanobacteria, Enterobacter, Enterococcus, Erwinia, Escherichia coli, Franciscella, Fusobacteria, Helicobacter, Hemophilus, Kingella, Klebsiella, Legionella, Listeria, Meningococcus, Moraxella, Mycoplasma, Neisseria, Pasteurella, Prevotella, Proteus, Pseudomonas, Rickettsia, Salmonella, Serratia, Shigella, Staphylococcus, Streptococcus, Treponema, Vibrio and Yersinia, ESKAPE pathogens, protozoa, parasitic nematodes, fungi, and schistosomes. However, any clinically relevant virus and/or organism shall be included in the present invention.

Importantly, the present invention enables the easy and cheap preservation of a potentially infectious biological sample. Coincidentally, nucleic acids present in the potentially infectious biological sample are stabilized for future analysis. The potentially infectious biological sample is added to a pre-prepared transportation container, such as a transportation tube, followed by closing and mixing the tube, which induces a heat reaction due to the contact of the absorption agent with the liquid solvent, which in some embodiments is the underlying basis for the preservation of the potentially infectious biological sample due to desiccation. Subsequently, the preserved and stabilized sample can be shipped by regular surface mail without the requirement of a cold chain transportation.

According to the present invention, the absorption agent is used for release of energy upon contact of the absorption agent with the liquid solvent, wherein the released energy preserves a pathogen, such as a bacterium, a virus, a fungus, a parasite, or a protozoan, present in the potentially infectious biological sample.

In one embodiment, the absorption agent is activated by the absorption of moisture from the liquid solvent at a temperature ranging from 1 to 45°, preferably from 5 to 40°, more preferably from 10 to 35°, and most preferably from 15 to 30°.

In another embodiment, the absorption agent fully absorbs the moisture from the liquid solvent upon contact.

In a further preferred embodiment relating to the kit of the first aspect of this invention, the absorption agent is in the form selected from a granular form, a bead form, and a powder form. In a particularly preferred embodiment, which can be combined with any aspect and/or embodiment of the present invention, the absorption agent has a granular form.

According to the present invention, any absorption agent may be used that releases energy upon contact with a liquid solvent. In a preferred embodiment relating to the kit for the preservation of a biological sample according to the first aspect of the present invention, the absorption agent is a zeolite and/or a compact zeolite preform.

Zeolites are ideal absorption agents due to their high chemical and thermal resistance, the regular pore system with pore openings in the subnanometer range and the possibility of forming specific interactions with absorbed molecules due to a variable cation composition. Zeolites are commonly used both in static absorption processes and in dynamic absorption processes. Importantly, zeolites can also be used for heat storage and for heat conversion, because the process of takes place under heat absorption, and the process of absorption takes place under the release of thermic energy in form of heat. The amount of heat absorbed in the process of can be released almost completely, and, thereby, the use of zeolites can contribute to environmental protection. Furthermore, zeolites can also be used as catalysts, catalyst components, and components for zeolite membranes.

In one embodiment, the absorption agent is a zeolite and/or a compact zeolite preform, optionally wherein the zeolite or the compact zeolite preform is in the form selected from a granular form, a bead form, and a powder form, further optionally wherein the zeolite and/or the compact zeolite preform has a water absorption capacity ranging between 20 and 40%, preferably between 25 and 35%, more preferably between 28 and 32%, even more preferably between 30,4 and 31,2%, and most preferably around 30,8% of total weight.

In a further preferred embodiment, the zeolite or the compact zeolite preform is in the form selected from a granular form, a bead form, and a powder form. In a particularly preferred embodiment, which can be combined with any aspect and/or embodiment of the present invention, the zeolite or the compact zeolite preform has a granular form.

Yet another preferred embodiment pertains to the kit for the preservation of a biological sample according to the first aspect of the present invention, wherein the zeolite and/or the compact zeolite preform has a water absorption capacity ranging between 20 and 40%, preferably between 25 and 35%, more preferably between 28 and 32%, even more preferably between 30,4 and 31,2%, and most preferably around 30,8% of total weight, such as of total granular weight or of total bead weight.

In yet another embodiment, the zeolite or the compact zeolite preform has a space filling of 80% or more, and wherein the compact zeolite preform has a zeolite content of at least 90% and preferably at least 95%, determined by means of a suitable absorption method. The person of skill is aware of suitable absorption methods useful for the present invention. Without being limited thereto, some of these methods have been reviewed in Tessema Derbe, *et al.* (Tessema Derbe, Shewaye Temesgen, Mamaru Bitew, "A Short Review on Synthesis, Characterization, and Applications of Zeolites", Advances in Materials Science and Engineering, vol. 2021, Article ID 6637898, 17 pages, 2021. https://doi.org/10.1155/2021/6637898), which shall be incorporated herein by reference.

A further preferred embodiment pertains to the kit for the preservation of a biological sample according to the first aspect of the present invention, wherein the zeolite or the compact zeolite preform is based on zeolite Y, preferably with a molar SiO2/ Al2O3 ratio greater than 4.9 or zeolite X or zeolite A.

In a particularly preferred embodiment, the absorption agent is a zeolite or a compact zeolite preform, wherein the zeolite or the compact zeolite preform is Köstrolith 13X (Köstrolith 13X BFK).

Methods for production of a zeolite or a compact zeolite preform according to the present invention, and methods of characterization of the zeolite or the compact zeolite preform, have been disclosed in EP2906341 (B1), which shall be incorporated herein by reference.

In a preferred embodiment, the zeolite or the compact zeolite preform has a space filling of 80% or more, and wherein the compact zeolite preform has a zeolite content of at least 90%, preferably at least 95%, determined by means of a suitable adsorption method, optionally wherein the zeolite or the compact zeolite preform is based on zeolite Y, preferably with a molar SiO2/ Al2O3 ratio greater than 4.9 or zeolite X or zeolite A, optionally wherein the zeolite or the compact zeolite preform is Köstrolith 13X.

In one embodiment, the absorption agent is coated and/or is covered by a heat conductor, optionally wherein the heat conductor is a metal selected from aluminum, silver, gold, copper, iron, brass, tungsten, aluminum nitride, silicon carbide, diamond, graphite, and zinc, preferably wherein the heat conductor is aluminum.

According to the present invention, the heat conductor distributes the energy released by the absorption agent, thereby facilitating the inactivation of pathogens and/or the stabilization of a biological molecule. In one embodiment, the heat conductor is a metal selected from aluminum, silver, gold, copper, iron, brass, tungsten, aluminum nitride, silicon carbide, diamond, graphite, and zinc, preferably wherein the heat conductor is aluminum. However, any kind of heat conductor can be used for the present invention. In a preferred embodiment, the heat conductor distributes the released energy quickly and effectively, thereby facilitating the inactivation of pathogens.

In one embodiment, the heat conductor is a coating of the absorption agent with aluminum, optionally wherein the coating is a thin and/or a porous coating.

In a preferred embodiment, the energy released by the absorption agent upon contact with a liquid solvent is supplied via the heat conductor to the liquid solvent.

In one embodiment, the liquid solvent is water, ethanol, methanol, acetone, acetic acid, tetrachloroethylene, toluene, methyl acetate, ethyl acetate, benzene, and/or chloroform, optionally wherein the extraction container, such as the extraction tube, comprising the liquid solvent further comprises an organic molecule, such as a protein (for example a proteinase), a peptide, a surfactant (for example sodium dodecyl sulfate), a chelator, a chaotropic substance (for example Guanidine Thiocyanate), or an amino acid like histidine, and/or an inorganic molecule, such as boric acid or borax, further optionally wherein the organic molecule and/or the inorganic molecule is a stabilizer for a nucleic acid, for example a stabilizer for DNA and/or for RNA, preferably wherein the liquid solvent comprises boric acid, borax, histidine, sodium dodecyl sulfate (SDS), TRIS-EDTA (Tris (hydroxymethyl) aminomethan and ethylenediaminetetraacetic acid), N-lauroylsarcosine, sodium N-Lauroylsarcosinate, and/or HEPES (4-(2-hydroxyethyl)-1-piperazineethanesulfonic acid). However, any kind of liquid solvent can be used in accordance with the present invention. The term "liquid solvent" is used interchangeably with the term "aqueous solution" within the present invention.

In one embodiment, the absorption agent is located in a transportation container, such as a transportation tube, optionally wherein adapters are located on the exterior part of the transportation container, such as the transportation tube, wherein the adapters allow inserting the transportation tube into a second tube, such as a larger second tube.

In one embodiment, the larger second container, such as the larger second tube, is a standard laboratory tube, such as a 1.5 ml Eppendorf^{®} tube.

In one embodiment relating to the kit of the first aspect of the present invention, the absorption agent is located in a transportation container, such as a transportation tube, optionally wherein adapters are located on the exterior part of the transportation container, such as the transportation tube, wherein the adapters allow inserting the transportation container, such as the transportation tube, into a second container, such as a second tube.

In one embodiment relating to the kit of the first aspect of the present invention, the absorption agent is located in a transportation container, such as a transportation tube, wherein the transportation container, such as the transportation tube, can be closed by a cap, optionally wherein water can evaporate from the transportation container, such as the transportation tube, after closing the transportation container, such as the transportation tube by the cap, further optionally wherein the cap comprises holes, wherein said holes are covered with paper, such as filter-paper. Such holes are suitable for ventilation within the transportation container, such as the transportation tube.

According to a preferred embodiment, the biological sample is a bodily fluid selected from the group consisting of saliva, sputum, serum, plasma, blood, pharyngeal, nasal secretions, nasal pharyngeal secretions, sinus secretions, urine, stool, mucus, mucus from the oral cavity, sputum, spit, gastric juices, pancreatic juices, bone marrow aspirates, cerebral spinal fluid, feces, semen, products of lactation or menstruation, cervical secretions, vaginal fluid, tears, secretions from the skin, such as from the scalp, urethra, penile epithelium, feet and nails, deposited secretions, wound swabs, swabs from the trunk, samples of abscesses, punctates, biopsies, samples of implants, and lymphbiological fluid, optionally wherein the biological sample is an infectious biological sample.

In one embodiment, a "biological sample" according to the present invention is a biological sample of a subject suspected of having an infectious disease. In yet another embodiment, the biological sample is an infectious biological sample.

In one embodiment, the extraction container, such as the extraction tube, has a flexible wall, optionally wherein the extraction container, such as the extraction tube, can be closed by a drop cap.

A further embodiment relates to a kit according to the first aspect of the present invention, wherein the kit further comprises:
(i) a swab for collecting the biological sample, optionally wherein the swab is a plastic swab or a wooden swab, further optionally wherein the swab has a flocking at the sampling site of the swab, and/or
(ii) an instruction manual for kit directions.

Another aspect of the present invention, which can be combined with any of the other embodiments and/or aspects, pertains to the use of an absorption agent for the preservation of a biological sample, wherein the absorption agent is capable of releasing energy of at least 100.000 J/kg, preferably of at least 200.000 J/kg, more preferably of at least 300.000 J/kg, and most preferably of around 330.000 J/kg, upon contact with a liquid solvent, wherein the biological sample comprises at least one pathogen and/or at least one biological molecule, such as a nucleic acid, a protein (e.g., an antibody and/or insulin), a fatty acid (e.g., an omega 3 fatty acid), a small molecule, an organic and/or an inorganic compound, optionally wherein the at least one pathogen is a bacterium, a virus, a fungus, a parasite, or a protozoan, and wherein the preservation of the biological sample comprises an inactivation of the at least one pathogen and/or a stabilization of the at least one biological molecule present in the biological sample.

A further aspect, which can be combined with any of the other embodiments and/or aspects, relates to the use of a kit according to the first aspect of the present invention for the preservation of a biological sample and/or for the transportation of a biological sample, wherein the preservation and/or the transportation of the biological sample comprises the immobilization and/or inactivation of at least one pathogen and/or the stabilization of at least one biological molecule, such as a nucleic acid, a protein (e.g., an antibody and/or insulin), a fatty acid (e.g., an omega 3 fatty acid), a small molecule, an organic and/or an inorganic compound, optionally wherein the at least one pathogen is a bacterium, a virus, a fungus, a parasite, or a protozoan, present in the biological sample, optionally wherein the immobilization, inactivation and/or stabilization of the at least one pathogen and/or the at least one biological molecule present in the biological sample is induced by the release of energy and/or an increase in temperature upon contact of an absorption agent with a liquid solvent.

In one embodiment relating to the use of a kit according to the first aspect of the present invention for the transportation of a biological sample, the use is for microbiome analysis and/or aids microbiome analysis. Thus, said aspect and any other aspect of the present invention can also be used for microbiome analysis, and/or can also aid microbiome analysis.

Importantly, degradation of nucleic acids upon delay in sample transportation or sample processing is often a problem of transportation and processing methods of biological samples. However, the present invention is advantageous over prior art transportation methods, because it allows samples to be transported in a dry state. Due to the dry state of the biological sample, nucleic acids, such as RNA and DNA, in the biological sample are better protected against enzymatic degradation, since enzymes such as DNAses or RNAses are not as active in the dry state. Thus, the present invention enables molecular detection methods, such as PCR, after a certain time period, such as after a couple of days or weeks, even if the sample is not shipped by a cold-chain transportation method. Instead, samples can be transported by conventional surface mail at room temperature (or even under varying temperature ranges).

For a molecular PCR-based diagnostic method, it is not required that the pathogenic organism is viable in the sample for analysis. Instead, only the intact nucleic acid of the genome is required, which allows to reduce the biosafety risk by inactivating and/or neutralizing the pathogenic organisms prior transportation of the sample for molecular diagnostic methods. Since the present invention allows to maintain the stability of nucleic acids for downstream diagnostic applications, the present invention is particularly useful for subsequent diagnostic analysis techniques, such as immunoassays; sequencing, such as Next Generation Sequencing (NGS); PCR, and mass spectrometry.

In one embodiment relating to a use according to the present invention, the preservation (inactivation) of pathogens in a potentially infectious biological sample occurs by an exothermic reaction induced upon contact of an absorption agent, such as a zeolite substrate, with a liquid solvent. Thereby, components of the biological sample are immobilised in a solid form on a substrate, which is caused by desiccation induced by the release of energy and/or the increase in temperature upon contact of the absorption agent with the liquid solvent.

In one embodiment relating to any use according to the present invention, the use occurs directly within a transportation container, such as a transportation tube. Thereby, pathogens present within the potentially infectious biological sample are directly inactivated within the transportation container, such as the transportation tube.

In one embodiment relating to a use according to the present invention, the biological sample comprises at least one pathogen and/or at least one biological molecule, such as a nucleic acid, a protein (e.g., an antibody and/or insulin), a fatty acid (e.g., an omega 3 fatty acid), a small molecule, or an organic compound, optionally wherein the at least one pathogen is a bacterium, a virus, a fungus, a parasite, or a protozoan, and wherein the preservation of the biological sample comprises an inactivation of the at least one pathogen and/or a stabilization of the at least one biological molecule present in the biological sample.

A further embodiment pertains to a use according to the present invention, wherein the absorption agent is a substance that is activated by the absorption of moisture from the liquid solvent, and wherein the absorption agent is a substance that releases energy and/or increases its temperature upon absorption of moisture from the liquid solvent, thereby facilitating preservation of the at least one pathogen and/or the at least one biological molecule present in the biological sample, optionally wherein the absorption agent is releasing energy of at least 100.000 J/kg, preferably of at least 200.000 J/kg, more preferably of at least 300.000 J/kg, and most preferably of around 330.000 J/kg, upon contact with the liquid solvent over a period of no more than 10 min, preferably of no more than 5 min, more preferably of no more than 3 min, and most preferably of no more than 2 min. In one embodiment, the preservation of the at least one pathogen present in the biological sample is caused by desiccation.

In one embodiment, the absorption agent located in a transportation container, such as a transportation tube, or located on a substrate is mixed with at least one organic compound, such as a protein (for example a proteinase), and/or with at least one inorganic substance, such as a bead, like a magnetic bead, a metallic bead (for example an aluminum bead), or a ceramic bead, optionally wherein the at least one organic compound and/or the at least one inorganic substance is able to regulate the temperature in the transportation tube or of the substrate, preferably wherein the regulation is a reduction of a first temperature, wherein the first temperature is a temperature that increased upon contact of the absorption agent with the liquid solvent, and/or wherein the regulation is a retention of a second temperature over a period of time, such as for at least 1 minute, at least 2 minutes, at least 3 minutes, at least 4 minutes, or at least 5 minutes, wherein the second temperature is lower than the first temperature, optionally wherein the first temperature and/or the second temperature is at least 40°C, preferably at least 50°C, more preferably at least 60°C, even more preferably at least 70°C, even more preferably at least 8o°C, even more preferably at least 90°C, and most preferably at least 100°C.

In one embodiment, the absorption agent is mixed with at least at least one organic compound, such as a protein (for example a proteinase), and/or with at least one inorganic substance, such as a bead, like a magnetic bead, a metallic bead (for example an aluminum bead), or a ceramic bead, wherein the absorption agent is in a solid state.

In a preferred embodiment, the absorption agent is releasing energy of at least 100.000 J/kg, preferably of at least 200.000 J/kg, more preferably of at least 300.000 J/kg, and most preferably of at least 330.000 J/kg upon contact with the liquid solvent over a period of no more than 10 min, preferably of no more than 5 min, more preferably of no more than 3 min, and most preferably of no more than 2 min.

According to the present invention, the absorption agent is a substance that releases energy upon contact with the liquid solvent. Said release of energy subsequently and/or simultanousely causes an increase in temperature of the composition, optionally wherein the composition is present within a transportation container, such as a transportation tube. Said increase in temperature induces an inactivation of cells within the composition, which is optionally present within the transportation container, such as the transportation tube, including at least one pathogen, such as a bacterium, a virus, a fungus, a parasite, or a protozoan. In one example, the inactivation of cells and/or viruses within the composition, which are optionally present within the transportation container, such as the transportation tube, occurs by denaturation of proteins.

In a further preferred embodiment relating to a use according to the present invention, the absorption agent is in the form selected from a granular form, a bead form, and a powder form.

In a preferred embodiment relating to a use according to the present invention, the absorption agent is a zeolite and/or a compact zeolite preform. In a further preferred embodiment, the zeolite or the compact zeolite preform is in the form selected from a granular form, a bead form, and a powder form.

In a particularly preferred embodiment relating to a use according to the present invention, the absorption agent is a zeolite or a compact zeolite preform, wherein the zeolite or the compact zeolite preform is Köstrolith 13X (Köstrolith 13X BFK).

In one embodiment relating to a use according to the present invention, the absorption agent is coated and/or is covered by a heat conductor, optionally wherein the heat conductor is a metal selected from aluminum, silver, gold, copper, iron, brass, tungsten, aluminum nitride, silicon carbide, diamond, graphite, and zinc, preferably wherein the heat conductor is aluminum. In one embodiment, the heat conductor is a coating of the absorption agent with aluminum, optionally wherein the coating is a thin and/or a porous coating.

In a preferred embodiment relating to a use according to the present invention, the energy released by the absorption agent upon contact with a liquid solvent is supplied via the heat conductor to the liquid solvent.

In one embodiment relating to a use according to the present invention, the liquid solvent is water, ethanol, methanol, acetone, acetic acid, tetrachloroethylene, toluene, methyl acetate, ethyl acetate, benzene, and/or chloroform, optionally wherein the extraction tube comprising the liquid solvent further comprises an organic molecule, such as a protein (for example a proteinase), a peptide, a surfactant (for example sodium dodecyl sulfate), a chelator, a chaotropic substance (for example Guanidine Thiocyanate), or an amino acid like histidine, and/or an inorganic molecule, such as boric acid or borax, further optionally wherein the organic molecule and/or the inorganic molecule is a stabilizer for a nucleic acid, for example a stabilizer for DNA and/or for RNA, preferably wherein the liquid solvent comprises boric acid, borax, histidine, sodium dodecyl sulfate (SDS), Guanidine Thiocyanate, TRIS-EDTA (Tris (hydroxymethyl) aminomethan and ethylenediaminetetraacetic acid), N-lauroylsarcosine, sodium N-Lauroylsarcosinate, and/or HEPES (4-(2-hydroxyethyl)-1-piperazineethane-sulfonic acid).

In one embodiment relating to a use according to the present invention, the absorption agent is located in a transportation tube, optionally wherein adapters are located on the exterior part of the transportation tube, wherein the adapters allow inserting the transportation tube into a second tube.

In one embodiment relating to a use according to the present invention, the larger second container, such as the larger second tube, is a standard laboratory tube, such as a 1.5 ml Eppendorf^{®} tube.

According to a preferred embodiment relating to a use according to the present invention, the biological sample is a bodily fluid selected from the group consisting of saliva, sputum, serum, plasma, blood, pharyngeal, nasal secretions, nasal pharyngeal secretions, sinus secretions, urine, stool, mucus, mucus from the oral cavity, sputum, spit, gastric juices, pancreatic juices, bone marrow aspirates, cerebral spinal fluid, feces, semen, products of lactation or menstruation, cervical secretions, vaginal fluid, tears, secretions from the skin, such as from the scalp, urethra, penile epithelium, feet and nails, deposited secretions, wound swabs, swabs from the trunk, samples of abscesses, punctates, biopsies, samples of implants, and lymphbiological fluid, optionally wherein the biological sample is an infectious biological sample.

In one embodiment relating to a use according to the present invention, a "biological sample" according to the present invention is a biological sample of a subject suspected of having an infectious disease. In yet another embodiment, the biological sample is an infectious biological sample.

In one embodiment relating to a use according to the present invention, the sample is preserved by desiccation, which is preferably induced by the release of energy and/or an increase in temperature upon contact of the liquid solvent with the absorption agent.

In a preferred embodiment, any use according to the present invention does not comprise the use of a hazardous component. In another embodiment, any use according to the present invention is non-toxic for humans.

Yet another aspect of the present invention, which can be combined with any other aspect and/or embodiment of the present invention, relates to a method for preserving a biological sample, the method comprising the steps of:
a) providing a biological sample, wherein the biological sample is optionally provided on a swab;
b) adding the biological sample to an extraction container, such as an extraction tube, comprising a liquid solvent and/or inserting the swab into an extraction container, such as an extraction tube, comprising a liquid solvent;
c) resuspending the biological sample in the liquid solvent, optionally by turning the swab in the liquid solvent and/or by applying pressure to at least one wall of the extraction container, such as the extraction tube;
d) optionally, closing the extraction container, such as the extraction tube, with a drop cap, and
e) adding the biological sample in the liquid solvent to an absorption agent located in a transportation container, such as a transportation tube, or located on a substrate, wherein the absorption agent is capable of releasing energy of at least 100.000 J/kg, preferably of at least 200.000 J/kg, more preferably of at least 300.000 J/kg, and most preferably of around 330.000 J/kg, upon contact with the liquid solvent,
wherein the contact of the absorption agent with the liquid solvent allows an activation of the absorption agent by the absorption of moisture from the liquid solvent, which causes a release of energy and/or an increase in temperature, thereby preserving the biological sample.

In one embodiment, in step e) of the method, 1 drop, 2 drops, 3, drops, 4, drops, 5 drops, 6 drops, 7 drops, 8 drops, 9 drops, 10 drops, or any number of drops of the biological sample in the liquid solvent is added to the absorption agent located in the transportation container, such as the transportation tube, or located on the substrate, such as paper. In a preferred embodiment, 6 drops of the biological sample in the liquid solvent are added to the absorption agent located in the transportation container, such as the transportation tube, or located on the substrate, such as paper.

In yet another embodiment, step e) of the method is followed by an incubation step, wherein the biological sample in the liquid solvent added to the absorption agent located in the transportation tube or located on the substrate is incubated for a period of time, such as for 5 minutes, for 10 minutes, for 15 minutes, for 20 minutes, for 25 minutes, for 30 minutes, for 35 minutes, for 40 minutes, for one hour, or for any period of time. In a preferred embodiment, the biological sample in the liquid solvent added to the absorption agent located in the transportation container, such as the transportation tube, or located on the substrate, such as paper, is incubated for 30 minutes.

In one embodiment relating to the method for the preservation of a biological sample, the biological sample comprises at least one pathogen and/or at least one biological molecule, such as a nucleic acid, a protein (e.g., an antibody and/or insulin), a fatty acid (e.g., an omega 3 fatty acid), a small molecule, or an organic compound, optionally wherein the at least one pathogen is a bacterium, a virus, a fungus, a parasite, or a protozoan, and wherein the preservation of the biological sample comprises an inactivation of the at least one pathogen and/or a stabilization of the at least one biological molecule present in the biological sample.

In a preferred embodiment, the preservation of the biological sample comprises an inactivation of at least one pathogen present in the biological sample, such as an inactivation of a bacterium, a virus, a fungus, a parasite, or a protozoan.

A further embodiment pertains to the method for the preservation of a biological sample, wherein the absorption agent is a substance that is activated by the absorption of moisture from the liquid solvent, and wherein the absorption agent is a substance that releases energy and/or increases its temperature upon absorption of moisture from the liquid solvent, thereby facilitating preservation of the at least one pathogen and/or the at least one biological molecule present in the biological sample, optionally wherein the absorption agent is releasing energy of at least 100.000 J/kg, preferably of at least 200.000 J/kg, more preferably of at least 300.000 J/kg, and most preferably of around 330.000 J/kg, upon contact with the liquid solvent over a period of no more than 10 min, preferably of no more than 5 min, more preferably of no more than 3 min, and most preferably of no more than 2 min. In one embodiment, the preservation of the at least one pathogen present in the biological sample is caused by desiccation.

In one embodiment, the absorption agent located in a transportation tube or located on a substrate is mixed with at least at least one organic compound, such as a protein (for example a proteinase), and/or with at least one inorganic substance, such as a bead, like a magnetic bead, a metallic bead (for example an aluminum bead), or a ceramic bead, optionally wherein the at least one organic compound and/or the at least one inorganic substance is able to regulate the temperature in the transportation tube or of the substrate, preferably wherein the regulation is a reduction of a first temperature, wherein the first temperature is a temperature that increased upon contact of the absorption agent with the liquid solvent, and/or wherein the regulation is a retention of a second temperature over a period of time, such as for at least 1 minute, at least 2 minutes, at least 3 minutes, at least 4 minutes, or at least 5 minutes, wherein the second temperature is lower than the first temperature, optionally wherein the first temperature and/or the second temperature is at least 40°C, preferably at least 50°C, more preferably at least 60°C, even more preferably at least 70°C, even more preferably at least 8o°C, even more preferably at least 90°C, and most preferably at least 100°C.

In one embodiment, the absorption agent is mixed with at least at least one organic compound, such as a protein (for example a proteinase), and/or with at least one inorganic substance, such as a bead, like a magnetic bead, a metallic bead (for example an aluminum bead), or a ceramic bead, wherein the absorption agent is in a solid state.

In a preferred embodiment, the absorption agent is releasing energy of at least 100.000 J/kg, preferably of at least 200.000 J/kg, more preferably of at least 300.000 J/kg, and most preferably of at least 330.000 J/kg upon contact with the liquid solvent over a period of no more than 10 min, preferably of no more than 5 min, more preferably of no more than 3 min, and most preferably of no more than 2 min.

According to the present invention, the absorption agent is a substance that releases energy upon contact with the liquid solvent. Said release of energy subsequently and/or simultaneously causes an increase in temperature of the composition, optionally wherein the composition is present within a transportation container, such as a transportation tube. Said increase in temperature induces an inactivation of cells within the composition, which is optionally present within the transportation container, such as the transportation tube, including a pathogen, such as a bacterium, a virus, a fungus, a parasite, or a protozoan. In one example, the inactivation of cells within the composition, which is optionally present within the transportation container, such as the transportation tube, occurs by denaturation of proteins.

In one embodiment relating to the method of the present invention, the absorption agent fully absorbs the moisture from the liquid solvent upon contact.

In a further preferred embodiment relating to the method of the present invention, the absorption agent is in the form selected from a granular form, a bead form, and a powder form.

In a preferred embodiment relating to the method for the preservation of a biological sample, the absorption agent is a zeolite and/or a compact zeolite preform.

In a further preferred embodiment relating to the method of the present invention, the zeolite or the compact zeolite preform is in the form selected from a granular form, a bead form, and a powder form.

A further preferred embodiment pertains to the method for the preservation of a biological sample, wherein the zeolite or the compact zeolite preform is based on zeolite Y, preferably with a molar SiO2/ Al2O3 ratio greater than 4.9 or zeolite X or zeolite A.

In a particularly preferred embodiment relating to the method of the present invention, the absorption agent is a zeolite or a compact zeolite preform, wherein the zeolite or the compact zeolite preform is Köstrolith 13X (Köstrolith 13X BFK).

In one embodiment relating to the method of the present invention, the absorption agent is coated and/or is covered by a heat conductor, optionally wherein the heat conductor is a metal selected from aluminum, silver, gold, copper, iron, brass, tungsten, aluminum nitride, silicon carbide, diamond, graphite, and zinc, preferably wherein the heat conductor is aluminum. In one embodiment, the heat conductor is a coating of the absorption agent with aluminum, optionally wherein the coating is a thin and/or a porous coating.

In a preferred embodiment relating to the method of the present invention, the energy released by the absorption agent upon contact with a liquid solvent is supplied via the heat conductor to the liquid solvent.

In one embodiment relating to the method of the present invention, the liquid solvent is water, ethanol, methanol, acetone, acetic acid, tetrachloroethylene, toluene, methyl acetate, ethyl acetate, benzene, and/or chloroform, optionally wherein the extraction tube comprising the liquid solvent further comprises an organic molecule, such as a protein (for example a proteinase), a peptide, a surfactant (for example sodium dodecyl sulfate), a chelator, a chaotropic substance (for example Guanidine Thiocyanate), or an amino acid like histidine, and/or an inorganic molecule, such as boric acid or borax, further optionally wherein the organic molecule and/or the inorganic molecule is a stabilizer for a nucleic acid, for example a stabilizer for DNA and/or for RNA, preferably wherein the liquid solvent comprises boric acid, borax, histidine, sodium dodecyl sulfate (SDS), Guanidine Thiocyanate, TRIS-EDTA (Tris (hydroxymethyl) aminomethan and ethylenediaminetetraacetic acid), N-lauroylsarcosine, sodium N-Lauroylsarcosinate, and/or HEPES (4-(2-hydroxyethyl)-1-piperazineethane-sulfonic acid).

In one embodiment relating to the method of the present invention, the absorption agent is located in a transportation container, such as a transportation tube, optionally wherein adapters are located on the exterior part of the transportation tube, wherein the adapters allow inserting the transportation tube into a second tube. In another embodiment relating to the method of the present invention, the larger second tube is a standard laboratory tube, such as a 1.5 ml Eppendorf^{®} tube.

According to a preferred embodiment relating to the method of the present invention, the biological sample is a bodily fluid selected from the group consisting of saliva, sputum, serum, plasma, blood, pharyngeal, nasal secretions, nasal pharyngeal secretions, sinus secretions, urine, stool, mucus, mucus from the oral cavity, sputum, spit, gastric juices, pancreatic juices, bone marrow aspirates, cerebral spinal fluid, feces, semen, products of lactation or menstruation, cervical secretions, vaginal fluid, tears, secretions from the skin, such as from the scalp, urethra, penile epithelium, feet and nails, deposited secretions, wound swabs, swabs from the trunk, samples of abscesses, punctates, biopsies, samples of implants, and lymph biological fluid, optionally wherein the biological sample is an infectious biological sample. In one embodiment relating to the method of the present invention, a "biological sample" according to the present invention is a biological sample of a subject suspected of having an infectious disease. In yet another embodiment, the biological sample is an infectious biological sample.

A further aspect of the present invention, which can be combined with any of the other embodiments and/or aspects, pertains to a kit according to the first aspect of the present invention for use in medicine.

Yet another aspect of the present invention, which can be combined with any of the other embodiments and/or aspects, relates to a kit according to the first aspect of the present invention for use in the prevention and/or treatment of an infectious disease, wherein the infectious disease is preferably selected from Acinobacter infection, actinomycosis, African sleeping sickness, acquired immunodeficiency syndrome, amebiasis, anaplasmosis, anthrax, Arcanobacterium haemolyticum infection, Argentine hemorrhagic fever, ascariasis, aspergillosis, astrovirus infection, babesiosis, Bacillus cereus infection, bacterial pneumonia, bacterial vaginosis, Bacteroides infection, balantidiasis, Baylisascaris infection, BK virus infection, black piedra, Blastocystic hominis infection, blastomycosis, Bolivian hemorrhagic fever, botulism, Brazilian hemorrhagic fever, brucellosis, bubonic plaque, Burkholderi infection, Buruli ulcer, Calicivirus infection, camptobacteriosis, candidiasis, cat-scratch disease, Chagas disease, chancroid, chickenpox, chikungunya, chlamydia, Chlamydophila pneumoniae infection, cholera, chromoblastomycosis, clonorchiasis, Clostridium difficile infection, coccidioidomycosis, Colorado tick fever, common cold, COVID-19, Creutzfeldt-Jakob disease, Crimean-Congo hemorrhagic fever, crytococcosis, cryptosporidiosis, cutaneous larva migrans, cyclosporiasis, cysticercosis, cytomegalovirus infection, dengue fever, Desmodesmus infection, deintamoebiasis, diphtheria, diphyllobothriasis, dracunculiasis, ebola hemorrhagic fever, echinococcosis, ehrlichiosis, enterobiasis, Enterococcus infection, Enterovirus infection, epidemic typhus, erythema infection, exanthema subitum, fasciolopsiasis, fasciolosis, fatal familial insomnia, filariasis, food poisoning by Clostridium myonecrosis, free-living amebic infection, Fusobacterium infection, gas gangrene, geotrichosis, Gerstmann-Straussler-Scheinker syndrome, giardiasis, glanders, gnathostomiasis, gonorrhea, granuloma inguinale, Group A streptococcal infection, Group B streptococcal infection, Haemophilus influenzae infection, hand foot and mouth disease, hantavirus pulmonary syndrome, Heartland virus disease, Heliobacter pylori infection, hemolytic-uremic syndrome, hemorrhagic fever with renal syndrome, hepatitis A, hepatitis B, hepatitis C, hepatitis D, hepatitis E, herpes simplex, histoplasmosis, hookworm infection, human bocavirus infection, human ewingii ehrlichiosis, human granulocyte anaplasmosis, human metapneuomovirus infection, human monocytic ehrlichiosis, human papillomavirus infection, human parainfluenza virus infection, hymenolepiasis, Epstein-Barr virus infectious mononucleosis, influenza, isosporiasis, Kawasaki disease, keratitis, Kingella kingae infection, kuru, lassa fever, Legionnaires' disease, leishmaniasis, leprosy, leptospirosis, listeriosis, lyme disease, lymphatic filariasis, lymphocytic choriomeningitis, malaria, Marburg hemorrhagic fever, measles, Middle East respiratory syndrome, melioidosis, meningitis, meningococcal disease, metagonimiasis, microsporidiosis, molluscum contagiosum, monkeypox, mumps, murine typhus, mycoplasma pneumonia, mycetoma, myiasis, neonatal conjunctivitis, variant Creutzfeldt-Jakob disease, nocardiosis, onchocerciasis, paracoccidioidomycosis, paragonimiasis, pasteurellosis, pediculosis capitis, pediculosis corporis, pediculosis pubis, pelvic inflammatory disease, pertussis, plague, pneumonia, poliomyelitis, Pontiac fever, Prevotella infection, primary amoebic meningoencephalitis, progressive multifocal leukoencephalopathy, psittacosis, Q fever, rabies, relapsing fever, respiratory syncytial virus infection, rhinosporidiosis, rhinovirus infection, rickettsial infection, rickettsialpox, Rift Valley Fever, Rocky Mountain spotted fever, rotavirus infection, rubella, salmonellosis, SARS coronavirus infection, severe acute respiratory syndrome, scabies, schistosomiasis, sepsis, shigellosis, shingles, smallpox, sporothrichosis, staphylococcal food poisoning, staphylococcal infection, staphylococcal infection, strongyloidiasis, subacute sclerosing panencephalitis, syphilis, taeniasis, tetanus, tinea barabe, tinea capitis, tinea corporis, tinea cruris, tinea manum, tinea nigra, tinea pedis, tinea unguium, tinea versicolor, toxocariasis, trachoma, toxoplasmosis, trichinosis, trichomoniasis, trichuriasis, tuberculosis, tularemia, typhoid fever, Ureaplasma urealyticum infection, valley fever, Venezuelan hemorrhagic fever, viral pneumonia, West Nile fever, white piedra, Yersinia psuedotuberculosis infection, yersiniosis, yellow fever, and zygomycosis. However, any infectious disease shall be included in the present invention.

The terms "of the [present] invention", "in accordance with the invention", "according to the invention" and the like, as used herein are intended to refer to all aspects and embodiments of the invention described and/or claimed herein.

As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by ±20%, ±15%, ±10%, and for example ±5%. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated.

It is to be understood that application of the teachings of the present invention to a specific problem or environment, and the inclusion of variations of the present invention or additional features thereto (such as further aspects and embodiments), will be within the capabilities of one having ordinary skill in the art in light of the teachings contained herein.

Unless context dictates otherwise, the descriptions and definitions of the features set out above are not limited to any particular aspect or embodiment of the invention and apply equally to all aspects and embodiments which are described.

All references, patents, and publications cited herein are hereby incorporated by reference in their entirety.

### BRIEF DESCRIPTION OF THE FIGURES

The figures show:
**Figure 1****:** shows a scheme of an exemplary kit for the preservation of a biological sample according to the present invention.
**Figure 2****:** displays a table showing the inactivation of different pathogens using the kit for the preservation of a biological sample according to the present invention.
**Figure 3****:** shows representative culture plates from experiments with (inactive) control zeolite, and from experiments with (active) zeolite used according to the present invention (A: Salmonella, B: Clostridium, C: Pseudomonas, D: Streptococcus pyogenes, and E: Aspergillus). The 4 plates correspond to different dilutions prior to plating, with the 1:10 dilution being the first plate, the 1:100 dilution the second, 1:1.000 dilution the third and 1.10.000 dilution the fourth plate.
**Figure 4****:** shows the preservation of nucleic acids and the positive effects of organic/inorganic additives.
**Figure 5****:** shows the use of the invention for Next Generation Sequencing. A. FastQC-Quality scores - stool sample stored in commercial storage medium for molecular diagnostics, that preserves DNA. B. FastQC-Quality scores - stool sample stored in invented transport solution.
**Figure 6****:** shows the use of the invention for the detection of microorganisms. Data underlying experiment 1 and 2: For the sequencing experiment, the specimen name "OPC2" was assigned to Swab B (commercial control storage medium) and the specimen name "OPC4" was assigned to Swab A (invention). All species identified in OPC2 were also detected in OPC4. In experiment 2, four species identified in OPC2 were not detected in OPC4 (marked with X on pages 11 and 12 of the figures).
**Figure 7****:** shows inactivation temperatures reached by Köstrolith 13X.

### EXAMPLES

Certain aspects and embodiments of the invention will now be illustrated by way of example and with reference to the description, figures and tables set out herein. Such examples of the methods, uses and other aspects of the present invention are representative only, and should not be taken to limit the scope of the present invention to only such representative examples.

The examples show:

### Example 1: Inactivation of different pathogens using a kit of the present invention

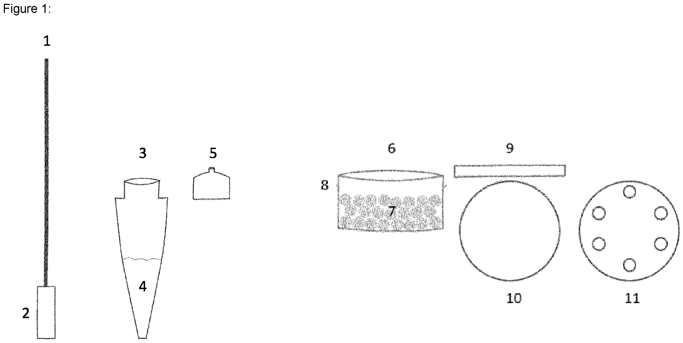

Figure 1 shows a scheme of an exemplary kit for the preservation of a biological sample according to the present invention. The kit comprises the following features:
(1) Swab from plastic or wood;
(2) Optionally, flocking at the sampling site of the swab;
(3) Extraction tube with a flexible wall;
(4) Liquid solvent;
(5) Drop cap;
(6) Specimen transportation tube;
(7) Absorption agent;
(8) Adapters;
(9) Cap of the transportation tube (side view);
(10) Cap of the transportation tube (top view), and
(11) Optionally, functionalization of the cap with filter-paper covered holes for ventilation.

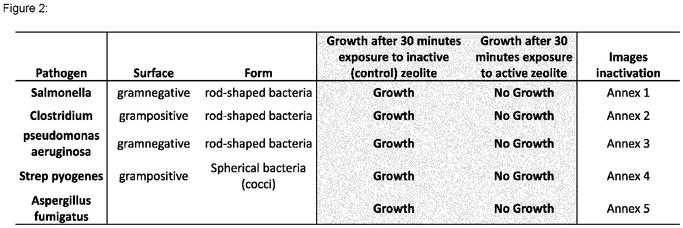

Figure 2 displays a table showing the inactivation of different pathogens. All experiments were performed in an ISO 17025 certified laboratory for pathogen inactivation testing. In brief, 200 µL of inoculum containing cultured pathogens (10^7 to 10^8 CFU/mL) was added to 2g of zeolite granules. After 30 minutes, the granule-inoculum-mixture was added to 20mL growth medium. 1mL of the medium was diluted 1:10 and plated on a culture plate suitable for the respective pathogen. Three additional dilutions were performed (1:100, 1:1000, 1:10.000) and plated on culture plates. The same procedure was performed with inactivated zeolite as a control. (Controls were prepared in the following way: Sterile, PCR-grade water was added to the active zeolite prior to its use, and then the zeolite was allowed to cool down and dry).

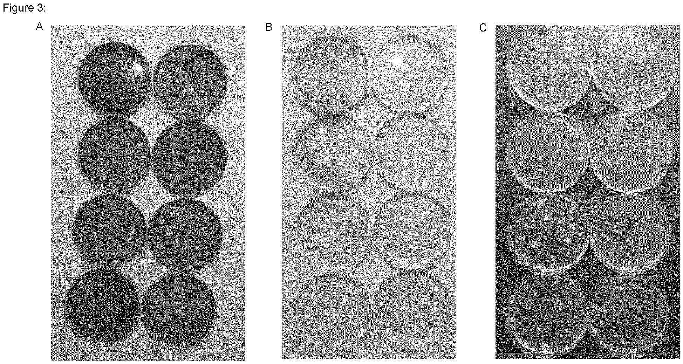

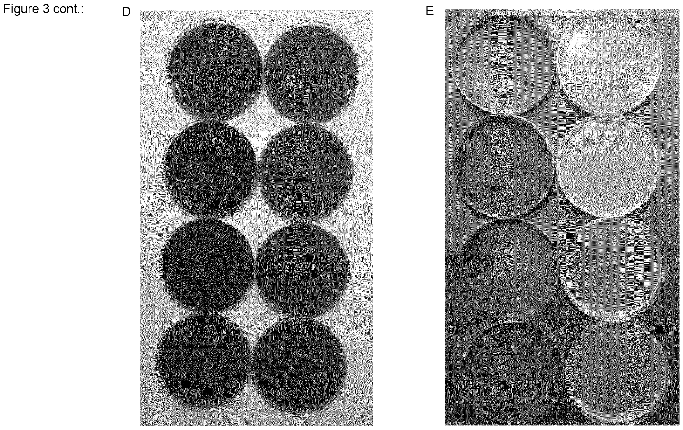

Figure 3 shows culture plates from the experiment with (inactive) control zeolite (4 plates on the left), and from the experiment with (active) zeolite (4 plates on the right) used according to the present invention. The 4 plates correspond to different dilutions prior to plating, with the 1:10 dilution being the first plate, the 1:100 dilution the second, 1:1.000 dilution the third and 1.10.000 dilution the fourth plate. "No Growth" in the table of Figure 2 indicates that none of the dilutions prepared showed pathogen growth (all 4 plates were negative). Figure 3A shows the results of experiments performed with Salmonella, Figure 3B shows the results of experiments performed with Clostridium, Figure 3C shows the results of experiments performed with Pseudomonas, Figure 3D shows the results of experiments performed with Streptococcus pyogenes, and Figure 3E shows the results of experiments performed with Aspergillus.

The results shown in Figure 2 and Figure 3 demonstrate that the temperature achieved by using a kit comprising Zeolite according to the present invention is sufficient to inactivate the pathogens Salmonella, Clostridium, Pseudomonas, Streptococcus pyogenes, and Aspergillus. These pathogens have been shown as a proof-of-concept. However, the use of a kit comprising Zeolite and/or a Zeolite according to the present invention also enables the inactivation of other pathogens besides Salmonella, Clostridium, Pseudomonas, Streptococcus pyogenes, and Aspergillus. For example, the use of a kit comprising Zeolite and/or a Zeolite according to the present invention also enables the inactivation of other pathogens like viruses, parasites, protozoans, or fungi, because the temperature induced upon contact of the absorption agent with the liquid solvent in a kit, a method, or according to a use of the present invention, is such that any pathogen, like a virus, parasites, protozoan, and/or fungus, is inactivated.

### Example 2: Preservation of nucleic acids

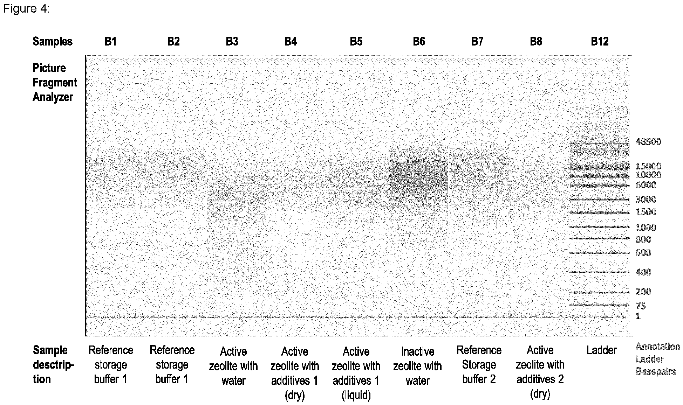

Figure 4 shows the sampling from clinical stool samples which was performed using a swab. The matrix obtained was resuspended in an extraction tube with aqueous solution (water with/without additives) and added to different types of storage systems. After 3 days of storage, cell lysis and DNA-cleanup was performed. Results show cleaned DNA on a fragment analyzer: Samples B1, B2, and B7 serve as reference with commercial DNA-stabilizing storage buffer. Compared to these references, stool resuspended in water and added to active zeolite (B3) shows clear degradation (smear created by DNA fragments reaching down to 75BP). Stool resuspended in water and applied to inactivated Köstrolith also shows clear degradation (B6). Upon addition of additives to the water in the extraction tube, less degradation is visible, no matter whether the volume of the additives is chosen in a way that the resulting zeolite-additive-cell-mixture finally enters a dry state (B4 and B8), or a liquid state (the entire water-additive-mixture does not evaporate; hence liquid still surrounds the zeolite; B5). The additives used were:
Additive 1* [sodium dodecyl sulfate and beads]
Additive 2* [Guanidine Thiocyanate, TRIS-EDTA, HEPES, Detergent]

### Example 3: Use of the Invention for Next Generation Sequencing

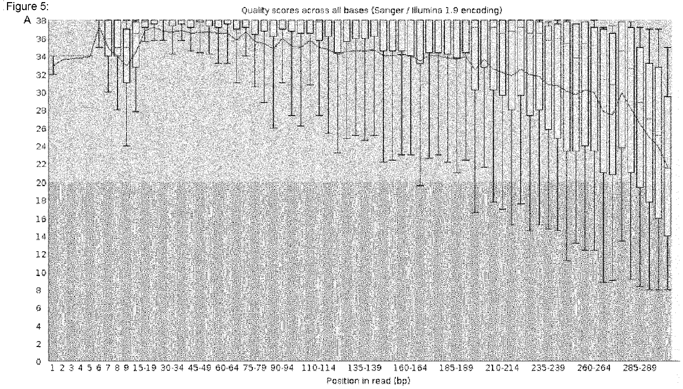

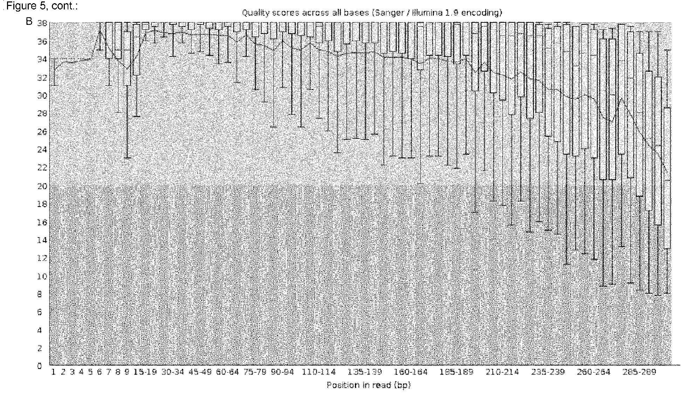

Figure 5 shows that there is no major difference in FastQC-Quality scores between the commercial storage medium and the kit of the present invention. The left image displays FastQC-Quality scores of a stool sample stored in a commercial storage medium for molecular diagnostics, that preserves DNA. The right image displays FastQC-Quality scores of a stool sample stored in the invented transportation solution (i.e. the kit of the present invention).

Summary of the underlying experimental procedure: One stool sample was sampled with two swabs: Swab A underwent the following workflow: (i) Insertion of the swab into an extraction tube filled with liquid solvent, (ii) resuspension of the sample captured on the swab by turning the swab in the solvent and by applying pressure to the walls of the tube, (iii) closing of the extraction tube with a drop cap and application of 6 drops of the liquid solvent onto the zeolite granulate (iv) incubation for 30 minutes. Swab B was inserted into a storage medium for molecular diagnostics, that preserves DNA. After 4 days, all samples underwent DNA extraction, DNA-cleanup, library preparation and sequencing with 300BP paired-end reads (>100.000 reads per sample) on an Illumina MiSeq sequencing machine. Importantly, there is no major difference in the quality scores between the commercial storage medium and the kit of the present invention.

### Example 4: Use of the Invention for the detection of Microorganisms

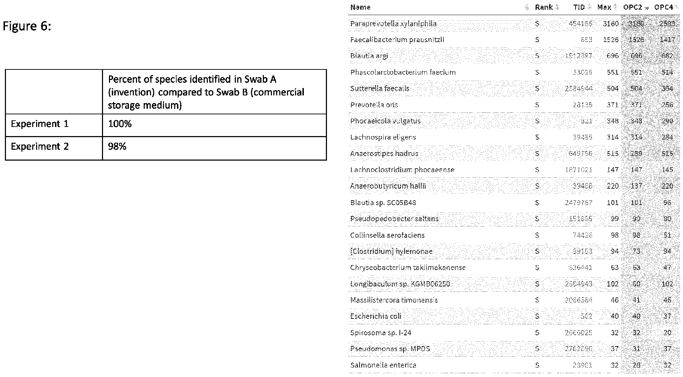

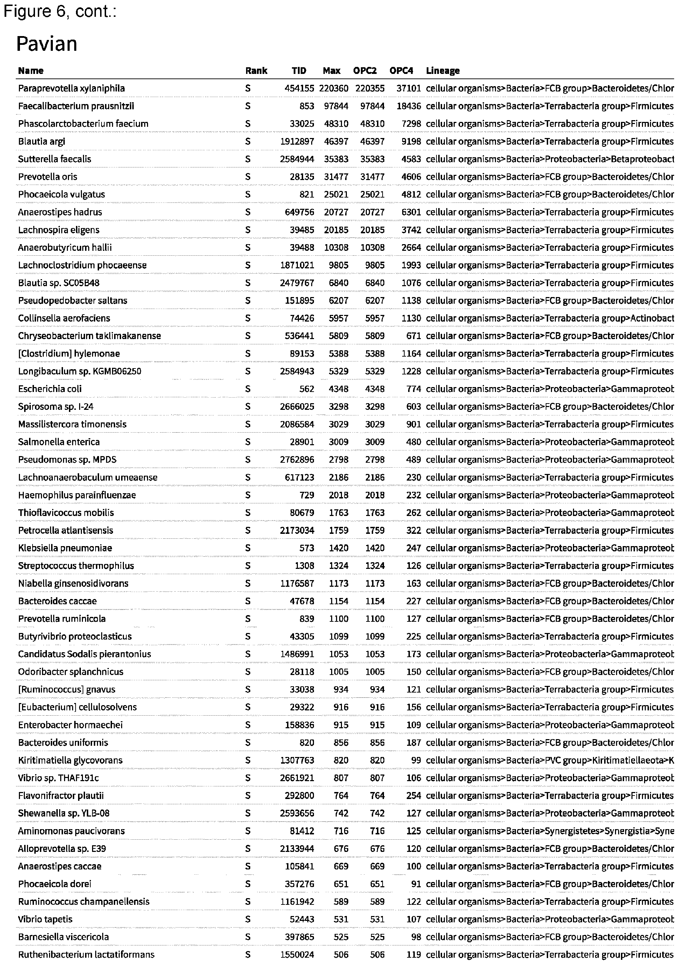

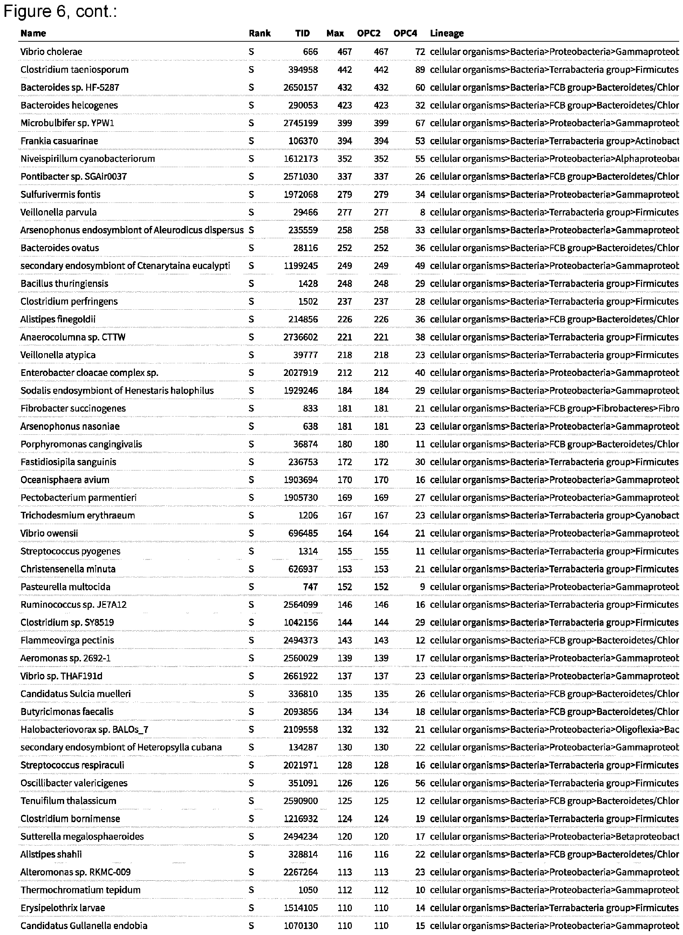

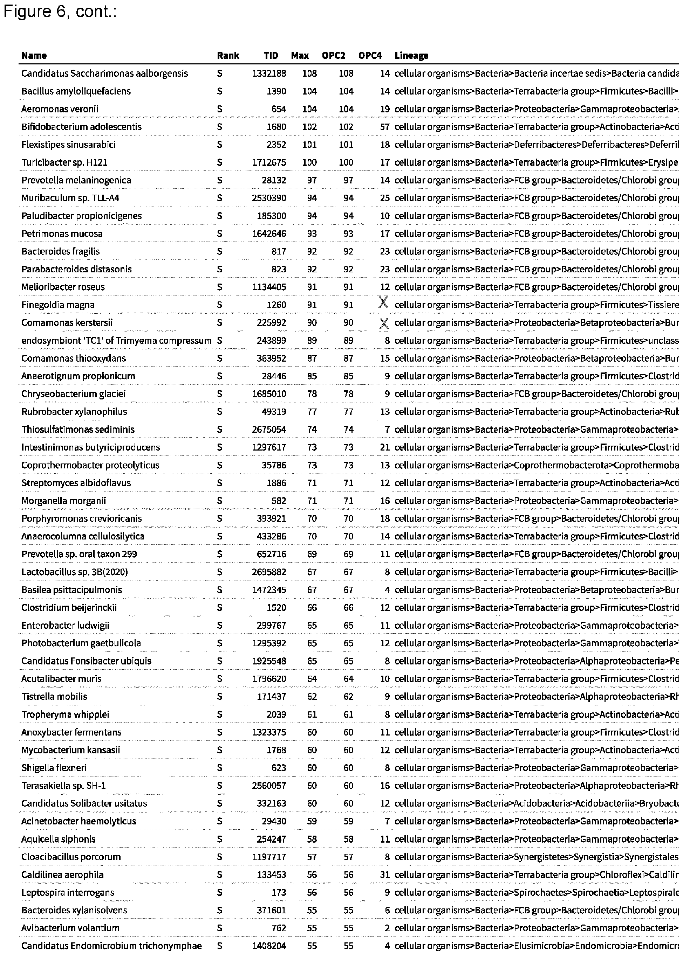

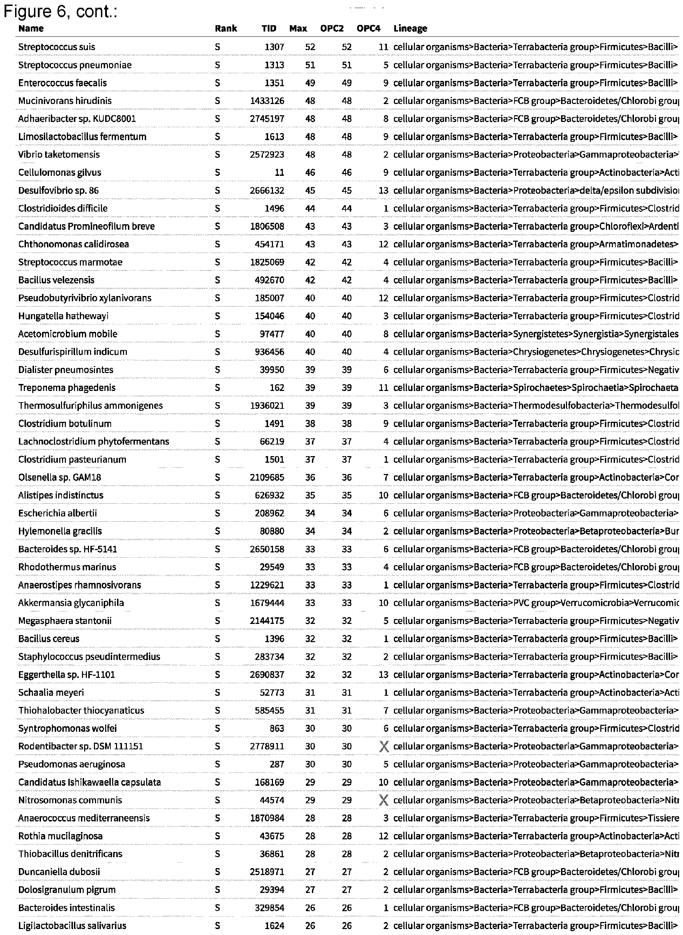

Figure 6 shows that there is no major difference in the detection of microorganisms between the commercial storage medium and the kit of the present invention.

Summary of the underlying experimental procedure: One stool sample was sampled with two swabs: Swab A underwent the following workflow: (i) Insertion of the swab into an extraction tube filled with liquid solvent, (ii) resuspension of the sample captured on the swab by turning the swab in the solvent and by applying pressure to the walls of the tube, (iii) closing of the extraction tube with a drop cap and application of 6 drops of the liquid solvent onto the zeolite granulate (iv) incubation for 30 minutes. Swab B was inserted into a storage medium for molecular diagnostics, that preserves DNA. After 4 days, all samples underwent DNA extraction, DNA-cleanup, library preparation and sequencing with 300BP paired-end reads (>10.000 reads in Experiment 1 and > 100.000 reads in Experiment 2) on an Illumina MiSeq sequencing machine. Data analysis was performed after Adapter trimming using Kraken2. Species with >30 mapped reads in the control (Swab B = commercial storage medium) were evaluated.

### Example 5: Inactivation temperatures reached by Köstrolith 13X

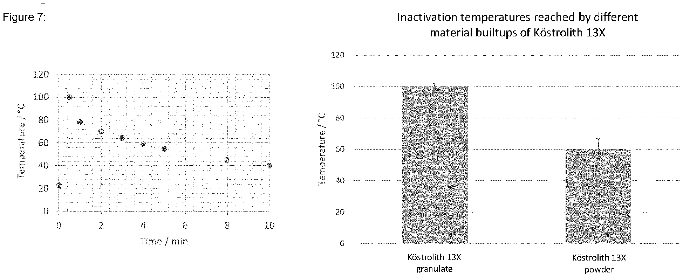

Figure 7 shows Temperature curves demonstrating the heat-development of Zeolite substance "Köstrolith 13X" upon contact with water in a specimen tube.

Temperature curves demonstrating the heat-development of Zeolite substance "Kostrolith 13X" upon contact with water in a specimen tube

For all temperature examinations, a matrix volume of 1mL was incubated with 200uL of water and the temperature was measured with a temperature-measuring probe at the surface of the matrix. The graph on the left shows the temperature profile of Köstrolith **13X** granules upon contact with water over time. The graph on the right shows inactivation temperatures reached by different material buildups of Köstrolith. The first bar shows data obtained from matrix consisting solely of Köstrolith **13X** as Zeolite Granulate (measurements in triplicates). The second column shows data obtained from matrix solely consisting of Köstrolith **13X** powder (measurements in triplicates).

### REFERENCES

1. Tessema Derbe, *et al.* (Tessema Derbe, Shewaye Temesgen, Mamaru Bitew, "A Short Review on Synthesis, Characterization, and Applications of Zeolites", Advances in Materials Science and Engineering, vol. 2021, Article ID 6637898, 17 pages, 2021. https://doi.org/10.1155/2021/6637898).

## Claims

1. A kit for the preservation of a biological sample, the kit comprising:
i) an absorption agent, which is capable of releasing energy of at least 100.000 J/kg, preferably of at least 200.000 J/kg, more preferably of at least 300.000 J/kg, and most preferably of around 330.000 J/kg, upon contact with a liquid solvent, optionally wherein the absorption agent is located in a transportation container, such as a transportation tube, or is located on a substrate, such as on a paper, and
ii) an extraction container, such as an extraction tube, comprising the liquid solvent.

2. The kit according to claim 1, wherein the biological sample comprises at least one pathogen and/or at least one biological molecule, such as a nucleic acid, a protein (e.g., an antibody and/or insulin), a fatty acid (e.g., an omega 3 fatty acid), a small molecule, or an organic compound, optionally wherein the at least one pathogen is a bacterium, a virus, a fungus, a parasite, or a protozoan, and wherein the preservation of the biological sample comprises an inactivation of the at least one pathogen and/or a stabilization of the at least one biological molecule present in the biological sample.

3. The kit according to claim 1 or 2, wherein the absorption agent is a substance that is activated by the absorption of moisture from the liquid solvent, and wherein the absorption agent is a substance that releases energy and/or increases its temperature upon absorption of moisture from the liquid solvent, thereby facilitating preservation of the at least one pathogen and/or the at least one biological molecule present in the biological sample, optionally wherein the absorption agent is releasing energy of at least 100.000 J/kg, preferably of at least 200.000 J/kg, more preferably of at least 300.000 J/kg, and most preferably of around 330.000 J/kg, upon contact with the liquid solvent over a period of no more than 10 min, preferably of no more than 5 min, more preferably of no more than 3 min, and most preferably of no more than 2 min.

4. The kit according to any one of claims 1 to 3, wherein the absorption agent located in a transportation container, such as a transportation tube, or located on a substrate is mixed with at least one organic compound, such as a protein (for example a proteinase), and/or with at least one inorganic substance, such as a bead, like a magnetic bead, a metallic bead (for example an aluminum bead), or a ceramic bead, optionally wherein the at least one organic compound and/or the at least one inorganic substance is able to regulate the temperature in the transportation container, such as the transportation tube, or of the substrate, preferably wherein the regulation is a reduction of a first temperature, wherein the first temperature is a temperature that increased upon contact of the absorption agent with the liquid solvent, and/or wherein the regulation is a retention of a second temperature over a period of time, such as for at least 1 minute, at least 2 minutes, at least 3 minutes, at least 4 minutes, or at least 5 minutes, wherein the second temperature is lower than the first temperature, optionally wherein the first temperature and/or the second temperature is at least 40°C, preferably at least 50°C, more preferably at least 60°C, even more preferably at least 70°C, even more preferably at least 8o°C, even more preferably at least 90°C, and most preferably at least 100°C.

5. The kit according to any one of claims 1 to 4, wherein the absorption agent is a zeolite and/or a compact zeolite preform, optionally wherein the zeolite or the compact zeolite preform is in the form selected from a granular form, a bead form, and a powder form, further optionally wherein the zeolite and/or the compact zeolite preform has a water absorption capacity ranging between 20 and 40%, preferably between 25 and 35%, more preferably between 28 and 32%, even more preferably between 30,4 and 31,2%, and most preferably around 30,8% of total weight.

6. The kit according to claim 5, wherein the zeolite or the compact zeolite preform has a space filling of 80% or more, and wherein the compact zeolite preform has a zeolite content of at least 90%, preferably at least 95%, determined by means of a suitable adsorption method, optionally wherein the zeolite or the compact zeolite preform is based on zeolite Y, preferably with a molar SiO2/ Al2O3 ratio greater than 4.9 or zeolite X or zeolite A, optionally wherein the zeolite or the compact zeolite preform is Köstrolith 13X.

7. The kit according to any one of claims 1 to 6, wherein the absorption agent is coated and/or is covered by a heat conductor, optionally wherein the heat conductor is a metal selected from aluminum, silver, gold, copper, iron, brass, tungsten, aluminum nitride, silicon carbide, diamond, graphite, and zinc, preferably wherein the heat conductor is aluminum.

8. The kit according to any one of claims 1 to 7, wherein the liquid solvent is water, ethanol, methanol, acetone, acetic acid, tetrachloroethylene, toluene, methyl acetate, ethyl acetate, benzene, and/or chloroform, optionally wherein the extraction container, such as the extraction tube, comprising the liquid solvent further comprises an organic molecule, such as a protein (for example a proteinase), a peptide, a surfactant (for example sodium dodecyl sulfate), a chelator, a chaotropic substance (for example Guanidine Thiocyanate), or an amino acid like histidine, and/or an inorganic molecule, such as boric acid or borax, further optionally wherein the organic molecule and/or the inorganic molecule is a stabilizer for a nucleic acid, for example a stabilizer for DNA and/or for RNA, preferably wherein the liquid solvent comprises boric acid, borax, histidine, sodium dodecyl sulfate (SDS), TRIS-EDTA (Tris (hydroxymethyl) aminomethan and ethylenediaminetetraacetic acid), N-lauroylsarcosine, sodium N-Lauroylsarcosinate, and/or HEPES (4-(2-hydroxyethyl)-1-piperazineethanesulfonic acid).

9. The kit according to any one of claims 1 to 8, wherein the absorption agent is located in a transportation container, such as a transportation tube, optionally wherein adapters are located on the exterior part of the transportation container, such as the transportation tube, wherein the adapters allow inserting the transportation container, such as the transportation tube, into a second container, such as a second tube.

10. The kit according to any one of claims 1 to 9, wherein the absorption agent is located in a transportation container, such as a transportation tube, and wherein the transportation container, such as the transportation tube, can be closed by a cap, optionally wherein water can evaporate from the transportation container, such as the transportation tube, after closing the transportation container, such as the transportation tube, by the cap, further optionally wherein the cap comprises holes, wherein said holes are covered with paper, such as filter-paper.

11. The kit according to any one of claims 1 to 10, wherein the biological sample is a bodily fluid selected from the group consisting of saliva, sputum, serum, plasma, blood, pharyngeal, nasal secretions, nasal pharyngeal secretions, sinus secretions, urine, stool, mucus, mucus from the oral cavity, sputum, spit, gastric juices, pancreatic juices, bone marrow aspirates, cerebral spinal fluid, feces, semen, products of lactation or menstruation, cervical secretions, vaginal fluid, tears, secretions from the skin, such as from the scalp, urethra, penile epithelium, feet and nails, deposited secretions, wound swabs, swabs from the trunk, samples of abscesses, punctates, biopsies, samples of implants, and lymphbiological fluid, optionally wherein the biological sample is an infectious biological sample.

12. The kit according to any one of claims 1 to 11, wherein the extraction container, such as the extraction tube, has a flexible wall, optionally wherein the extraction container, such as the extraction tube, can be closed by a drop cap.

13. The kit according to any one of claims 1 to 12, wherein the kit further comprises:
(i) a swab for collecting the biological sample, optionally wherein the swab is a plastic swab or a wooden swab, further optionally wherein the swab has a flocking at the sampling site of the swab, and/or
(ii) an instruction manual for kit directions.

14. Use of an absorption agent for the preservation of a biological sample, wherein the absorption agent is capable of releasing energy of at least 100.000 J/kg, preferably of at least 200.000 J/kg, more preferably of at least 300.000 J/kg, and most preferably of around 330.000 J/kg, upon contact with a liquid solvent, wherein the biological sample comprises at least one pathogen and/or at least one biological molecule, such as a nucleic acid, a protein (e.g., an antibody and/or insulin), a fatty acid (e.g., an omega 3 fatty acid), a small molecule, an organic and/or an inorganic compound, optionally wherein the at least one pathogen is a microbe, such as a bacterium, a virus, a fungus, or a parasite, and wherein the preservation of the biological sample comprises an inactivation of the at least one pathogen and/or a stabilization of the at least one biological molecule present in the biological sample.

15. Use of a kit according to any one of claims 1 to 13, for the preservation of a biological sample and/or for the transportation of a biological sample, wherein the preservation and/or the transportation of the biological sample comprises the immobilization and/or inactivation of at least one pathogen and/or the stabilization of at least one biological molecule, such as a nucleic acid, a protein (e.g., an antibody and/or insulin), a fatty acid (e.g., an omega 3 fatty acid), a small molecule, an organic and/or an inorganic compound, optionally wherein the at least one pathogen is a microbe, such as a bacterium, a virus, a fungus, or a parasite, present in the biological sample, optionally wherein the immobilization, inactivation and/or stabilization of the at least one pathogen and/or the at least one biological molecule present in the biological sample is induced by the release of energy and/or an increase in temperature upon contact of an absorption agent with a liquid solvent.

16. A method for preserving a biological sample, the method comprising the steps of:
a) providing a biological sample, wherein the biological sample is optionally provided on a swab;
b) adding the biological sample to an extraction container, such as an extraction tube, comprising a liquid solvent and/or inserting the swab into an extraction container, such as an extraction tube, comprising a liquid solvent;
c) resuspending the biological sample in the liquid solvent, optionally by turning the swab in the liquid solvent and/or by applying pressure to at least one wall of the extraction container, such as the extraction tube;
d) optionally, closing the extraction container, such as the extraction tube, with a drop cap, and
e) adding the biological sample in the liquid solvent to an absorption agent located in a transportation container, such as a transportation tube, or located on a substrate, wherein the absorption agent is capable of releasing energy of at least 100.000 J/kg, preferably of at least 200.000 J/kg, more preferably of at least 300.000 J/kg, and most preferably of around 330.000 J/kg, upon contact with the liquid solvent,
wherein the contact of the absorption agent with the liquid solvent allows an activation of the absorption agent by the absorption of moisture from the liquid solvent, which causes a release of energy and/or an increase in temperature,
thereby preserving the biological sample.
